(19) Europäisches Patentamt
European Patent Office
Office européen des brevets

(11) **EP 3 727 924 B1**

(12) **EUROPEAN PATENT SPECIFICATION**

(45) Date of publication and mention
of the grant of the patent:
**23.07.2025  Bulletin 2025/30**

(21) Application number: **18830314.3**

(22) Date of filing: **13.12.2018**

(51) International Patent Classification (IPC):
**B60L 3/02** *(2006.01)*      **B60L 50/50** *(2019.01)*
**B60L 15/20** *(2006.01)*      **B62B 5/00** *(2006.01)*

(52) Cooperative Patent Classification (CPC):
**B60L 3/02; B60L 15/20; B60L 15/2036;**
**B60L 50/50; B62B 5/0043;** B60L 2200/24;
B60L 2200/30; B60L 2200/34; B60L 2220/44;
B60L 2240/16; B60L 2240/22; B60L 2240/24;
B60L 2250/22; B62B 5/0006; B62B 2202/406;
(Cont.)

(86) International application number:
**PCT/IB2018/060037**

(87) International publication number:
**WO 2019/123143 (27.06.2019 Gazette 2019/26)**

(54) **MOTORIZED HANDLING DEVICE PUSHED BY HAND PROVIDED WITH A SAFETY MODULE**

MOTORISIERTE HANDHABUNGSEINRICHTUNG MIT HAND MIT EINEM SICHERHEITSMODUL

DISPOSITIF DE MANUTENTION MOTORISÉ POUSSÉ À LA MAIN MUNI D'UN MODULE DE SÉCURITÉ

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **19.12.2017  IT 201700146299**

(43) Date of publication of application:
**28.10.2020  Bulletin 2020/44**

(73) Proprietor: **Effortless Mobility S.r.l.**
**36077 Altavilla Vicentina (VI) (IT)**

(72) Inventors:
• **TOMASI, Ivan**
  **36051 Creazzo (VI) (IT)**
• **COLOGNI, Alberto L.**
  **24040 Osio Sopra (BG) (IT)**

(74) Representative: **Gregorj S.r.l.**
**Via L. Muratori, 13/b**
**20135 Milan (IT)**

(56) References cited:
**EP-A1- 1 157 914          EP-A1- 3 090 920**
**EP-A2- 2 332 806          WO-A2-2013/167600**
**CN-U- 205 131 283          US-A- 5 540 296**
**US-A1- 2008 039 990          US-A1- 2013 144 475**

• **SEGWAY INC.: "User Manual Segway Personal**
**Transporter (PT)", 2014, XP055502445, Retrieved**
**from the Internet <URL:http://www.segway.com/**
**media/1195/**
**24010-00001_aa_se_um_en_usb_user-manual.**
**pdf> [retrieved on 20180827]**

(52) Cooperative Patent Classification (CPC): (Cont.)
B62B 2301/20; Y02T 10/64; Y02T 10/70;
Y02T 10/72

## Description

### Technical field of the invention

The present invention refers to a motorized movement device, particularly a hand-pushed device, such as a baby buggy or a cart for transporting goods (such as a shopping trolley, a golf club trolley, an airport trolley, a suitcase, or similar), a disabled chair, a stretch, a walker, a hospital bed, or similar.

### Prior art

Motorized movement devices, wherein one or more motors move wheels as an aid to the user, for example for transporting heavy loads along long distances or sloped courses, are known in the art.

With reference to this matter the Applicant filed the Italian patent application No. 102017000041556, regarding a hand-pushed motorized movement device, comprising a first and second motors respectively connected to a first and second wheels, and commandable by respective command signals determined by signals from several sensors present in the device itself, in order to assist the user in reducing the effort.

EP 2 332 806 A2 describes a multiple buggy having seat portions for two children, where multiple buggy has three wheels, by which an auxiliary drive having an electric motor is propelled. The multiple buggy has a front wheel and two rear wheels, which can be driven independently by an electric motor. One actuating handle is provided with a number of sensors assigned to the actuating handle, wherein by means of the sensors actuation of the actuating handle can be detected. Output signals of the sensors can be fed to a control unit of the electric motors.

WO 2013/167600 A2 describes a manually operated transport trolley including assisted starting means. The transport trolley is equipped with a drive device for driving at least one trolley rolling member. The drive device is controlled as long as it is established that a force exerted manually on the trolley is greater than or equal to a given threshold.

### Brief summary of the invention

It is an object of the present invention to make available a motorized movement device configured to increase the overall safety of the device itself, particularly in order to reduce the risk of random undesired movements of the device itself, and/or the activation thereof under unsafe conditions.

This and other objects are fulfilled by a motorized movement device according to claim 1.

The dependent claims define possible advantageous embodiments of the invention.

### Brief description of the drawings

Some exemplifying non-limiting embodiments of the invention are described in the following with reference to the attached figures in order to better comprehend the invention and appreciate the advantages, wherein:

Figures from 1a to 1g illustrate motorized movement devices according to possible embodiments of the invention;
Figure 2 is a block diagram of a control unit of a motorized movement device according to a possible embodiment of the invention;
Figures 3a-3b schematically illustrate a possible maneuver for getting past an obstacle performed by a user of the motorized movement device;
Figures 4a and 4b are lateral views of a detail of the motorized movement device according to a possible embodiment in two different operative conditions;
Figures 5a and 5b are lateral views of a detail of the motorized movement device according to a further possible embodiment, in two different operative conditions;
Figure 6 is an exploded perspective view of a handle of the movement device according to a possible embodiment.

### Description of the embodiments of the invention

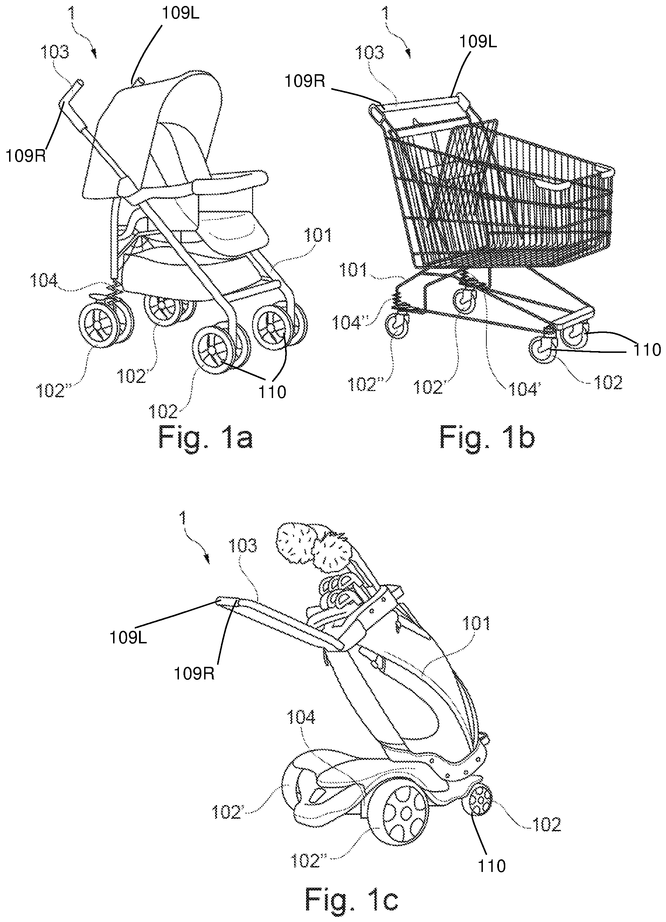

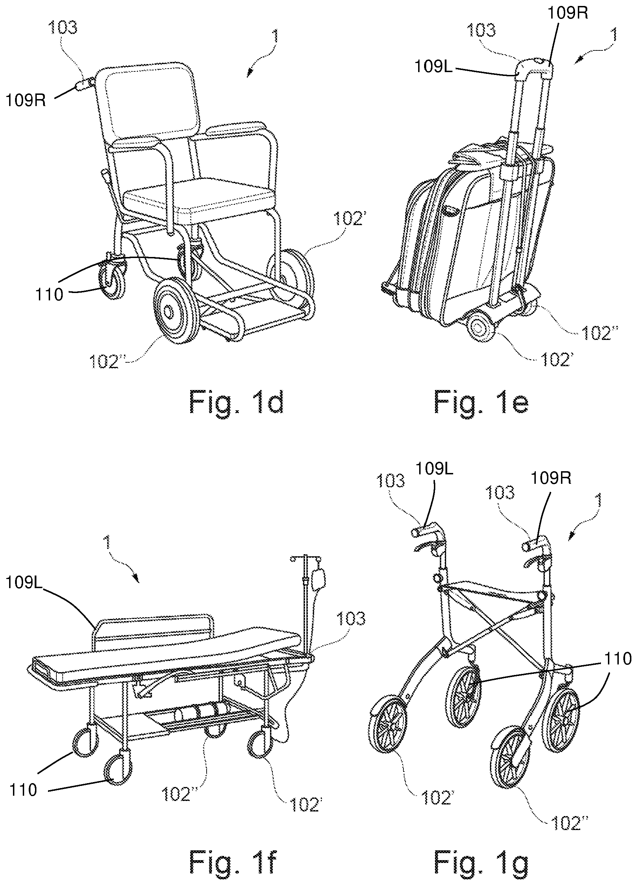

A motorized movement device, according to the invention, is indicated by the reference number 1 in the attached figures. The movement device 1 can be of the type discussed in the introductory part of the present description. For example, it can be a baby buggy (Figure 1a), a shopping trolley (Figure 1b), a golf club trolley (Figure 1c), a disabled chair (Figure 1d), a trolley for suitcases (Figure 1e), a hospital bed/stretch (Figure 1f), a walker (Figure 1g), or similar.

Generally, the movement device 1 comprises a frame 101, wheels 102 and one or more handles 103 by which a user moves the device itself. According to a possible embodiment, the movement device 1 comprises suspensions 104 operatively interposed between the frame 101 and at least some of the wheels 102.

The movement device 1 preferably comprises a first and second motors (not shown in the figures), independent from each other, each connected to a corresponding wheel of the device itself. Specifically, the wheels to which the motors are coupled are preferably non-steering wheels and are decoupled from each other. For example, the wheels connected to the motors can be the rear left 102' and right wheels 102", with reference to a baby buggy or a trolley. Consequently, each motor moves a corresponding wheel and therefore it is possible, by suitably acting on the motors, provide assistance not only to advance the device, but also to steer it, as it will be explained in the following. Alternatively, the motors can be coupled to the front wheels of the device (see the disabled chair in Figure 1d for example). Then, generally one or more notmotorized wheels are provided, preferably they are arranged on the opposite side of the frame with respect to the motorized wheels. Preferably, the motors include brushless motors which can be integrated in the wheels (aka hub motors) or are not integrated in them. Each motor is commanded by a command signal $I_{left}$, $I_{right}$, for example a current signal, to which driving/resistant torques exerted by the motors themselves correspond. The modes by which the command signals $I_{left}$, $I_{right}$ of the motors are determined, will be specifically described in the following. To each of the wheels, preferably to the motorized wheels 102", a respective suspension 104', 104" can be associated.

It is observed that, according to a possible further embodiment, it is possible to provide a single motor, and consequently a single motorized wheel, according to the type of the considered device. The following description will illustratively refer to a variant provided with two motors.

Advantageously, the movement device 1 further comprises one or more batteries (not shown in the figures) connected to the motors in order to exchange power with them. Particularly, the batteries can supply the motors and can be further recharged by receiving power from the motors when these act as generators. Moreover, the device 1 can comprise an outlet to be connected to an external power source for recharging the batteries.

According to a possible embodiment, in order to implement a user interface, the movement device further comprises a module communicating with an external device. For example, such communication module can be configured to communicate with a cell phone or smartphone of the user. The communication can be wireless or wired by connecting the external device to a suitable outlet associated to the communication module which, in this case, can be also used for recharging the external device, by supplying it by means of the hereinbefore cited batteries. As it will be explained, the possibility of implementing a communication between the motorized movement device 1 and the external device, enables an user to monitor and adjust the operative parameters of the movement device 1.

According to a possible embodiment, the movement device 1 comprises an inertial measuring unit adapted to sense at least the longitudinal acceleration $a_x$, pitch speed $\omega_y$, and yaw speed $\omega_z$ of the movement device 1 and to supply signals indicative of the same.

According to a possible embodiment, the movement device 1 comprises sensors for sensing the speeds $v_{left}$, $v_{right}$, of the motorized wheel/wheels 102', 102" to which the first and second motors are associated, configured to supply signals indicative of the same. Such speeds $v_{left}$, $v_{right}$ can be obtained for example by sensing the angular speeds of the two wheels 102' and 102", from which the linear speeds $v_{left}$, $v_{right}$ can be obtained by knowing the radiuses of the wheels.

Moreover, the movement device 1 comprises a group of safety sensors. Particularly, such safety sensors include a pair of sensors 109L, 109R respectively adapted to sense the presence of the user in two opposite lateral positions of the device itself and to supply signals indicative of such presence. In particular, the movement device 1 comprises a handle 103, and the presence sensors 109L, 109R are associated to this latter at left and right, in order to sense when a user is gripping the handle at the left and right sides of the device. The user presence sensors 109L, 109R comprise a photocell or an infrared sensor.

According to an embodiment, the safety sensors comprise sensors 111f, 111r for sensing the presence or absence of the load of the device at the front and/or at the rear, respectively. For example, if two front wheels and two rear wheels are provided, the device 1 comprises sensors for sensing loads at at least one of the two front wheels and at at least one of the two rear wheels. According to possible further variants, one or more sensors for sensing the presence or absence of the load of the device only at the front or one or more sensors for sensing the presence or absence of the load of the device only at the rear, can be provided. Such sensors can for example comprise rotative potentiometers, linear potentiometers, encoders, strain meters or similar, which correlate a displacement or strain with the applied load amount. Alternatively, switches, such as micro-switches or proximity sensors, for example proximity magnet sensors, can be used. Generally, such sensors are preferably only configured to distinguish the condition of a load (typically, when a load abuts the ground) or a load absence (typically, when the wheel is raised). Specifically, the sensors can be configured, for example, to provide, at the output, a positive signal if the respective wheel (preferably when the device is unloaded) abuts the ground and to supply a null signal (in other words the absence of the signal) when the wheel is raised.

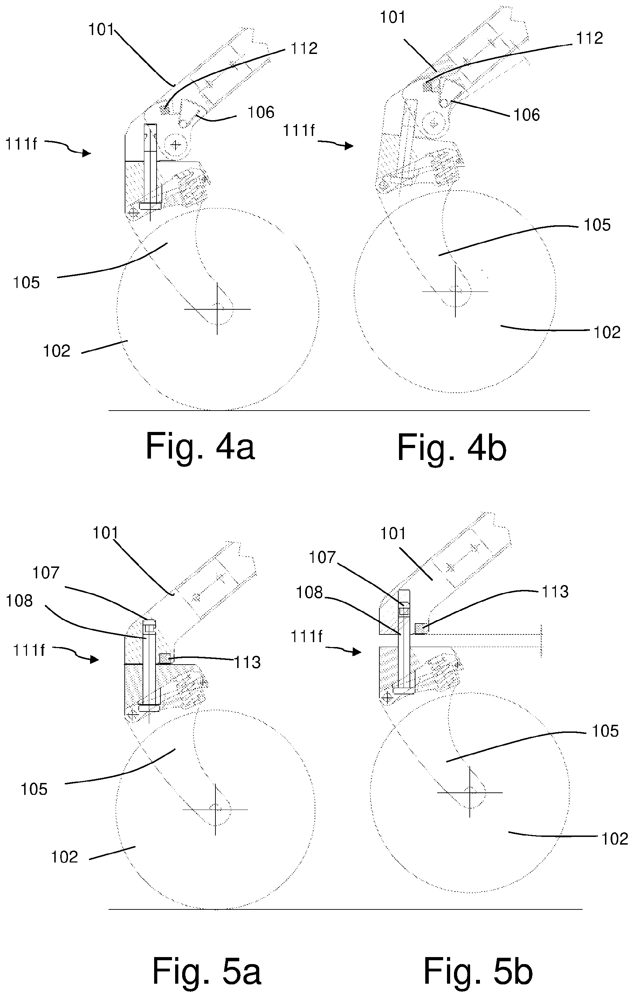

Figures 4a and 4b illustrate a detail of the front wheel according to a possible embodiment in two different operative conditions, particularly when a wheel abuts the ground and when the wheel is raised. According to this embodiment, the wheel 102 is supported by a wheel support 105 in turn pivoted with respect to the frame 101. Due to the weight, when the wheel is raised from the ground, the angle formed by the wheel support 105 and the frame 101 varies. A torsion spring 106 twists and the measurable torsion thereof is indicative of a load condition on the wheel. Alternatively, a switch 112, for example a micro-switch or a proximity sensor (for example a magnetic one) is capable of sensing when the torsion spring 106 reaches a determined strained condition corresponding to a determined applied load condition. For example, a twisted condition of the torsion spring 106 can correspond to a raised position of the wheel and therefore to a load absence.

Figures 5a and 5a illustrate a detail of the front wheel according to a further possible embodiment again in a wheel abutting ground condition and a raised wheel condition. Also according to this embodiment, the wheel 102 is supported by a wheel support 105. In this case, the wheel support 105 slides with respect to the frame 101 between two stop positions defined by the sliding movement of a shaped head 107 of a pin 108 fixed to the wheel support 105 in a shaped seat in the frame. Due to the weight, when the wheel is raised from the ground, the wheel support 105 moves downward. Based on the position of the pin with respect to the frame, it is possible to determine whether the wheel abuts or not. The stop positions of the pin 108, or at least the position corresponding to a load presence, can be sensed by a switch 113, for example a micro-switch, or a proximity switch, for example a magnetic one.

Preferably, at the rear wheels, the load sensors are associated to the suspensions 104 and measure the elongations thereof. Particularly, the device 1 can comprise sensors for sensing the elongations $\theta_{left}$, $\theta_{right}$ of the two suspensions 104' and 104" connected to the wheels 102', 102", to which the motors configured to supply signals indicative of the same are associated. Such sensors can comprise, for example, rotative potentiometers, linear potentiometers, encoders, strain meters, or similar.

The movement device 1 comprises a control unit 2 receiving, at the input, the signals from one or more of the above described sensors and commanding the motors based on these, according to the following modes. Moreover, the control unit 2 can command the power exchanges between the batteries and motors and can be connected to the communication module for interacting with the external device of the user.

Moreover, the movement device 1 comprises a safety module 50 selectively activating and deactivating the operations of the control unit 1 based on signals from the presence sensors 109L, 109R and further based on the front 111f and/or rear load sensors 111r, when provided.

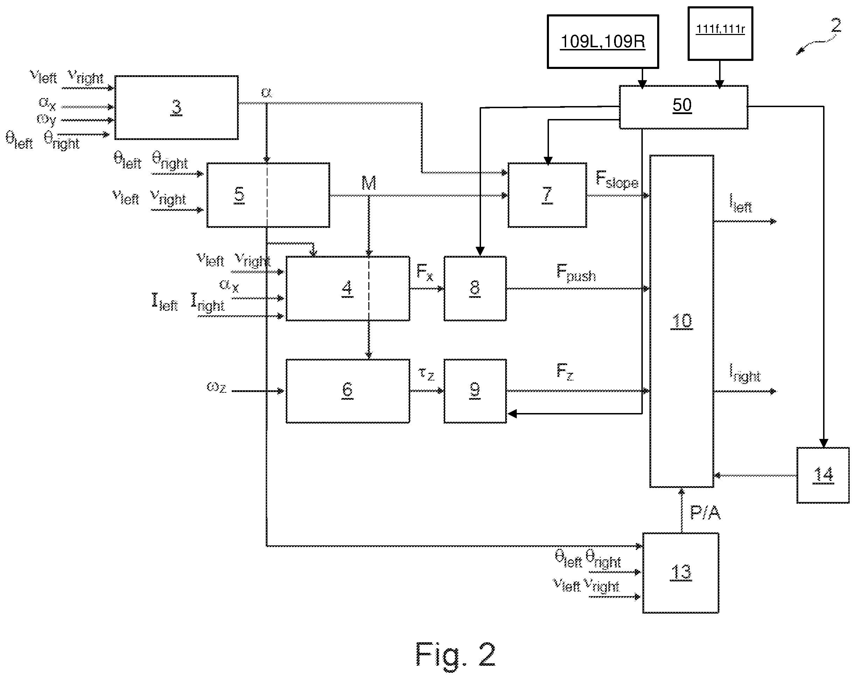

Figure 2 illustrates a block diagram of the control unit 2 of the motorized movement device 1 according to a possible embodiment of the invention.

The control unit 2 can comprise a module 3 for estimating the slope $\alpha$, in other words the inclination of the path followed by the movement device 1. The slope $\alpha$ can be estimated based on signals indicative of the longitudinal acceleration $a_x$, of the pitch angular speed $\omega_y$, and of the speeds $v_{left}$, $v_{right}$ of the motorized wheels 102' and 102". Estimating the slope $\alpha$ can be obtained by algorithms known in the art. In this regard, see for example: Matteo Corno, Pierfrancesco Spagnol, Sergio M. Savaresi, "Road slope estimation in bicycles without torque measurements." IFAC Proceedings Volumes 47.3 (2014): 6295-6300.

If the motorized movement device 1 is provided with the rear suspensions 104', 104" and their elongations $\theta_{left}$, $\theta_{right}$ are measured by the beforehand cited sensors, the slope $\alpha$ estimated by the discussed modes, can be corrected for considering the additional inclination with respect to the ground, taken by the ascending and descending movement device 1 due to the suspensions deformation caused by the weight of the trolley itself, and possibly due to the load transported by it. Particularly, once measured the deformation of the suspensions 104', 104", and once the geometrical characteristics of the movement device 1 are known, it is possible to know the additional inclination (positive or negative) to be subtracted to the estimated slope $\alpha$.

Moreover, the movement device 1 can comprise a module 4 for estimating the longitudinal thrust $F_x$ exerted by the user. The thrust, which is estimated by the module 4, is such to cause an advancement of the device 1 but is not such to steer it. The longitudinal thrust $F_x$ can be determined by the signals indicative of the longitudinal acceleration $a_x$ of the wheel speeds $v_{left}$, $v_{right}$, of the motor command signals $I_{left}$, $I_{right}$ and of the slope $\alpha$ estimated by the module 3.

For example, the longitudinal thrust $F_x$ can be calculated by the following dynamic relationship:

$$F_x = M \cdot a_x + \mu(v, M) + K(I_{left} + I_{right}) + M \cdot g \cdot sin(\alpha) \qquad (1)$$

wherein:

- M is the mass of the movement device and of the possible load thereof;
- $\mu$ is an experimentally obtained function expressing the resistant forces acting on the device as a function of the longitudinal speed v thereof - obtainable from the measured wheel speeds $v_{left}$, $v_{right}$ - and from the mass M thereof. Particularly, such resistance forces include the friction forces, particularly the rolling friction caused by the wheels rolling on the ground, and the aerodynamic forces which can be possibly neglected since they are low at low speeds;
- K is a function relating the command signals $I_{left}$, $I_{right}$ of the motors to the forces exerted by them, which will depend on the characteristics of the motors themselves, and also of the wheels to which the motors transmit the torque;
- g is the gravity acceleration.

With reference to the mass M, it is observed that this can be inserted as a constant value or can be set from time to time based on commands supplied by the user, specifically by his/her smartphone (the user can insert the weight of the baby transported by the buggy, for example). For example, the user can select a weight range between weight predefined ranges (light, medium, high...).

According to a further possible variant of the invention, the motorized movement device 1 can comprise a module 5 for estimating the mass M. Such estimate can be obtained in the presence of the suspensions 104', 104" and of the sensors for measuring the elongations thereof. Indeed, the module 5 can estimate the mass M based on signals indicative of the elongations $\theta_{left}$, $\theta_{right}$ of the suspensions and of the speeds $v_{left}$, $v_{right}$ of the wheels, besides the slope $\alpha$ estimated by the module 3. Indeed, under static conditions, it is possible to determine the additional load with respect to the mass of the unloaded device, simply from the static characteristic of the suspensions, which enables to relate the weight deformation to the additional weight. Obviously, under dynamic conditions, particularly in the presence of accelerations and decelerations, or also in the presence of ascents and descents of the path, the suspensions further inflect with respect to the static case. Therefore, the mass M estimating module 5 must estimate the mass M only in the presence of static conditions or almost static conditions. Consequently, the module 5 can be configured so that, if the wheel speeds $v_{left}$, $v_{right}$ and the accelerations obtainable by deriving these latter are below predetermined threshold values, the mass M is determined by means of a predetermined static map correlating the suspensions elongations $\theta_{left}$, $\theta_{right}$ and the estimated slope $\alpha$ with the mass M. Preferably, the mass M estimating module 5 comprises a low-pass filter configured to filter the signals indicative of the suspensions elongations $\theta_{left}$, $\theta_{right}$ in order to cancel the measure noises.

According to an embodiment, the movement device 1 comprises a module 6 for estimating the yaw torque $\tau_z$ applied by the user to the device 1 itself. The yaw torque $\tau_z$ is indicative of a turning maneuver performed by the user to the device 1. The yaw torque estimating module 6 receives, at the input, the signal indicative of the yaw speed $w_z$ and the mass M estimated by the module 5, if this is present. The yaw torque $\tau_z$ can be estimated from the above cited inputs, for example, by the following relationship:

$$\tau_z = \frac{1}{J(M)} \dot{\omega}_z \qquad (2)$$

wherein:

- $\dot{\omega}_z$ is the yaw angular acceleration obtainable by deriving the yaw angular speed $\omega_z$;
- $J(M)$ is the moment of inertia according to the yaw axis of the device 1, variable as a function of the mass M. If this is considered constant, the moment of inertia J will be also constant. If the mass M is estimated by the module 5 according to the hereinbefore said modes, it is also possible to update the estimate of the moment of inertia J based on a predefined relationship between the moment of inertia J and the estimated mass M. Generally, the moment of inertia J increases monotonically as the mass M increases.

According to the hereinbefore said modes, the control unit 2 can estimate the slope $\alpha$, the longitudinal thrust $F_x$ and the yaw torque $\tau_z$. Each magnitude represents an effort element of the user of the device 1, which must be reduced by suitable interlocking the motors 102', 102".

Advantageously, to this purpose, the control unit 2 comprises a slope compensating module 7 configured to determine a slope compensating force $F_{slope}$ based on the estimated slope $\alpha$ and possibly based on the estimated mass M, if the mass estimating module 5 is present. If the module 5 is absent, the mass is considered invariable according to what was hereinbefore said. For example, the slope compensating force $F_{slope}$ can be determined in order to compensate the gravitational force acting on the device 1 due to the slope $\alpha$. Particularly, the slope compensating force $F_{slope}$ can be calculated by the following relationship:

$$F_{slope} = M \cdot g \cdot sin(\alpha) \qquad (3)$$

wherein:

- M is the mass, considered invariable, or estimated by the module 5;
- g is the gravity acceleration.

If the estimated slope $\alpha$ represents an ascent, it is observed that the slope compensating force $F_{slope}$ is a motive force, while, if the estimate slope $\alpha$ represents a descent, the slope compensating force $F_{slope}$ is a braking force. If the slope compensating force $F_{slope}$ is calculated by the formula (3), the effect will maintain a static equilibrium of the device also in the presence of ascents or descents.

The control unit 2 can comprise a thrust amplifying module 8 configured to determine a thrust auxiliary force $F_{push}$ based on the longitudinal thrust $F_x$ estimated by the module 4, imparted by the user. For example, the thrust auxiliary force $F_{push}$ can be simply determined by multiplying the user imparted longitudinal thrust $F_x$ by a proportional factor. Such proportional factor can be invariable or can be set by the user by his/her portable device.

Moreover, the control unit 2 can comprise a yaw torque amplifying module 9 configured to determine a turning auxiliary force $F_z$ based on the yaw torque $\tau_z$ estimated by the module 6. For example, the turning auxiliary force $F_x$ can be simply determined so that is such to generate a torque obtained by multiplying the yaw torque $\tau_z$ by a proportional factor. Also this proportional factor can be invariable or can be set by the user by his/her portable device. Obviously, the turning auxiliary force $F_z$ is not equally applied by the two motors, since a torque for steering the device 1 must be generated.

Advantageously, the control unit 2 comprises a torque allocating module 10 configured to determine the command signals $I_{left}$, $I_{right}$ of the motors and consequently the torques supplied by each of them, based on the slope compensating force $F_{slope}$, the thrust auxiliary force $F_{push}$ and the turning auxiliary force $F_z$. Consequently, the motors supply torques which are such to exert the determined auxiliary forces.

For example, the motor command signals can be determined by the following relationships:

$$
\begin{aligned}
I_{left} &= \frac{(F_{slope} + F_{push})}{2K} + \frac{F_z}{2K} \\
I_{right} &= \frac{(F_{slope} + F_{push})}{2K} - \frac{F_z}{2K}
\end{aligned}
\qquad (4)
$$

wherein K is a dimensional constant. Based on the formula (4), it is observed that the slope compensating force $F_{slope}$ and the thrust auxiliary force $F_{push}$ are equally subdivided between the two motors, while the turning auxiliary force $F_z$ is applied to the two motors by opposite signs, so that the motors generate a steering torque about the yaw axis.

It is observed that the user can act, by the external device, on the interlocking level of the motors, and therefore on the torque supplied by them, for taking into account the type of the road surface. For example, the user can select among several predefined types of road surfaces (for example: smooth, normal, uneven).

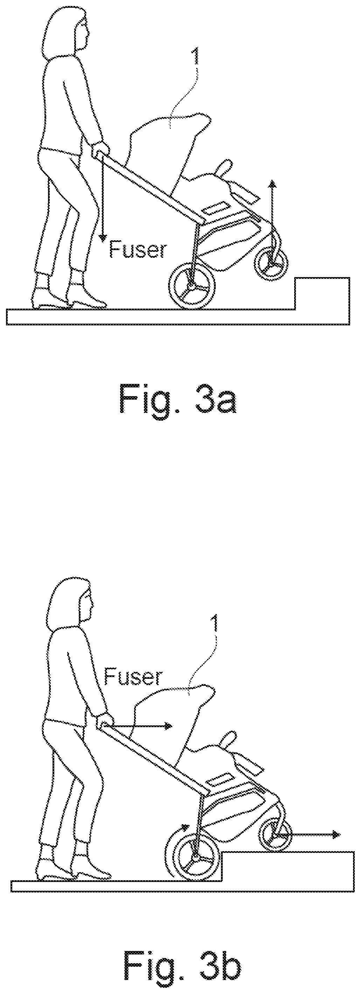

According to an embodiment, the control unit 2 comprises a module for identifying a maneuver for getting past an obstacle 13. In this regard, it is considered the situation illustrated in Figure 3, wherein the user, moving a buggy 1, finds an obstacle. In such condition, the typical maneuver performed by the user consists of raising the front wheels by exerting a downward force $F_{user}$ and then, while keeping the front wheels raised, longitudinally thrusting the buggy for getting past the step. In such condition, while the buggy is tilted, the slope estimating module 3 estimates an erroneous slope $\alpha$ because it is not due to a path inclination, but to a maneuver performed by the user. In such condition, therefore the slope compensating force $F_{slope}$ must be considered negligible by the torque allocating module 10, in order to prevent the motors from generating a torque because the device is not moving on a sloping road, but is in front of an obstacle.

Advantageously, the module for identifying a maneuver for getting past an obstacle 13 is configured to identify the presence of an obstacle based on the slope $\alpha$ estimated by the module 3, on signals indicative of the suspensions elongations $\theta_{left}$, $\theta_{right}$, and based on the wheel speeds $v_{left}$, $v_{right}$, and to supply, at the output, a signal indicative of the presence/absence (P/A) of the obstacle, which is supplied to the torque allocating module 10. This latter, in turn, is configured to neglect the slope compensating force $F_{slope}$ if the obstacle identifying module 13 supplies an obstacle presence signal.

The several possible obstacles, which can be found by the device 1, can be get past by standard maneuvers which are translated in specific trends of the signals at the input of the module for identifying a maneuver for getting past an obstacle 13. For example, still referring to the condition of Figure 3, when the speed decreases to zero, the load presence/absence load sensors at the rear wheels sense a compression of the rear suspensions and/or the presence of a load on the rear wheels caused by the raising front wheels, moreover the load presence/absence sensors at the front wheels sense an absence of the load, and at the same time an abrupt increase of the estimated slope $\alpha$. Then, a speed of the rear wheels is detected when the buggy is raised on the step, followed by an abrupt decrease of the estimated slope and also a decrease of the compression of the suspensions. Therefore, the maneuver for getting past the obstacle can be coded and identified by the module 13.

According to an embodiment, the movement device 1 comprises an assistance command 14, commandable by the user, for boosting the motors. The assistance command 14 is connected to the torque allocating module 10 so that, following a motors boosting request made by the user, this outputs command signals $I_{left}$, $I_{right}$ so that the motors supply an additional torque, which can be for example used for more easily getting past an obstacle, such as a step. According to a further possible variant, further assistance commands can be provided, for example for enabling the user to select a different direction of the additional torque that must be supplied by the motor. For example, with reference to Figure 3, if the buggy 1 is pulled and not pushed, the additional torque supplied by the motors must have a direction opposite to the one of the pushed buggy 1.

7

According to a possible further embodiment, the torque allocating module 10 can be commandable, for example, by the external device, so that the motors follow predefined torque laws. For example, for a buggy, the motors can be commanded for exerting to the buggy movements which are such to rock the baby without requiring a manual action of the user (for example oscillatory: back and forth, left and right actions).

Moreover, the movement device according to the invention can be set for performing further operations in addition to those described hereinbefore. For example, it is possible to set the motors so that they generate a resistance to the advancement (settable by the user through his/her smartphone, for example) for generating an additional effort perceived by the user. The consequence of such set is to physically exercise the user and to recharge the batteries.

According to a possible embodiment, the beforehand described user presence sensors possibly have in addition an anti-theft function.

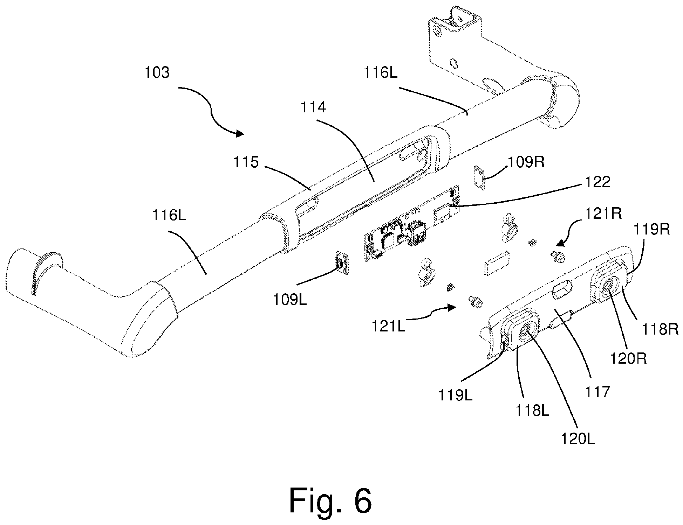

Figure 6 illustrates a handle 103 of the movement device 1 according to a possible embodiment. The handle 103 comprises, in a central portion 115 thereof, a seat 114 adapted to receive in the interior thereof the presence sensors 109L, 109R. The handle comprises two lateral portions 116L, 116R, at the left and at the right, adapted to be gripped by user at the sides of the seat 114. Preferably, the seat 114 is closable by a removable lid 117. The removable lid 117 preferably comprises outwardly protruding portions 118L, 118R, each comprising a corresponding opening 119L, 119R facing the respective lateral portion 116L, 116R. The presence sensors 109L, 109R, according to this variant, are preferably of the infra-red type and are positioned at the openings 119L, 119R, so that they are capable of sensing the presence or absence of a hand of the user respectively at the lateral portions 116L, 116R of the handle.

Preferably, the protruding portions 119L, 119R comprise second openings 120L, 120R adapted to receive corresponding buttons 121L, 121R. Such buttons 121L, 121R implement the beforehand cited assistance command 14 for causing the motors to generate an additional boost. Such boost is obtained by pressing just one of the two buttons 121L, 121R, or, alternatively, the user could be required to simultaneously press both the buttons. Advantageously, the interior of the seat 114 receives an electronic board 122 connected to the sensors 109L, 109R and/or to the buttons 121L, 121R.

The device 1 comprises a safety module 50 configured to enabling or disabling the modules adapted to determine the command signals of the motors by the torque allocating module 10, particularly the slope compensating module 7, thrust amplifying module 8, yaw torque amplifying module 9, assistance command 14. When the corresponding module is disabled, the torque allocating module 10 disregards the contribution to the identification of the motor command signals. It is observed that one or more among the slope compensating module 7, thrust amplifying module 8, yaw torque amplifying module 9, assistance command 14 (in addition to the mass estimating module 5, according to what was hereinbefore described) cannot be provided in the system. In this case, the safety module 50 activates or deactivates, based on the conditions, only the effectively provided modules among the hereinbefore cited ones. Further, the safety module 50 is configured to activate or deactivate the present modules based on signals from the user presence sensors 109L, 109R, and/or based on front 111f and/or rear load sensors 111r. It is also observed that the sensors, on which the operation of the safety module 50 is based, can be in a smaller number than the hereinbefore ones according to the modules effectively provided in the device 1. For example, if it is provided only the thrust amplifying module 8, only the user presence sensors, possibly only one sensor, are sufficient (in other words without distinguishing between left and right). for a correct operation of the safety module 50.

In the following, it is shown a table (table 1) illustrating the possible activation (ON) or deactivation conditions (OFF) of the modules of the device in the more sophisticated example, in other words when all the hereinbefore described modules are present, as a function of the signals from the user presence sensors 109L, 109R and from the front and rear load sensors. Such signals can assume two states: "present signal" (indicated by 1) or "absent signal" (indicated by 0). Obviously, as an alternative there are possible more complicated truth tables, wherein, for example, more than two discrete values are assigned to each signal and in this case, the possible combinations increase. Moreover, there are possible simplified tables if the present sensors and/or modules are in a number less than the ones shown in the following table.

Table 1

| Sensors | | | | Modules | | | |
|---|---|---|---|---|---|---|---|
| Left presence 109L | Right presence 109R | Rear load | Front load | Slope compensation | Thrust amplification 8 | Yaw torque amplification 9 | Assistance command 14 |
| 0 | 0 | 0 | 0 | OFF | OFF | OFF | OFF |
| 0 | 0 | 0 | 1 | OFF | OFF | OFF | OFF |
| 0 | 0 | 1 | 0 | OFF | OFF | OFF | OFF |
| 0 | 0 | 1 | 1 | OFF | OFF | OFF | OFF |

(continued)

| Sensors | | | | Modules | | | |
|---|---|---|---|---|---|---|---|
| Left presence 109L | Right presence 109R | Rear load | Front load | Slope compensation | Thrust amplification 8 | Yaw torque amplification 9 | Assistance command 14 |
| 0 | 1 | 0 | 0 | OFF | OFF | OFF | OFF |
| 0 | 1 | 0 | 1 | OFF | OFF | OFF | OFF |
| 0 | 1 | 1 | 0 | OFF | ON | ON | OFF |
| 0 | 1 | 1 | 1 | ON | ON | ON | OFF |
| 1 | 0 | 0 | 0 | OFF | OFF | OFF | OFF |
| 1 | O | O | 1 | OFF | OFF | OFF | OFF |
| 1 | 0 | 1 | 0 | OFF | ON | ON | OFF |
| 1 | 0 | 1 | 1 | ON | ON | ON | OFF |
| 1 | 1 | 0 | 0 | OFF | OFF | OFF | ON |
| 1 | 1 | 0 | 1 | OFF | OFF | OFF | ON |
| 1 | 1 | 1 | 0 | OFF | ON | ON | ON |
| 1 | 1 | 1 | 1 | ON | ON | ON | ON |

In this way it is possible to prevent or control the torque supplied from the motors, based on the effective conditions, in order to inhibit the device from performing undesired movements having possible consequent risks.

For example, if the presence of a user is not sensed neither at the right nor at the left, this means the user is not gripping the device and therefore all the modules are deactivated. Consequently, the motors will not supply a torque and the device could not accidentally move, on the contrary it will behave at the worst as an unassisted system.

If the presence of the user is sensed at least at left or at right, this means the user is gripping the device. Therefore, at least the thrust amplifying modules 8 and yaw torque amplifying module 9 are activated. Moreover, if the load is sensed both at the front and at the rear, it means that not only the device is gripped by the user, but also the rear and front of the load abuts the ground, so that all the modules are activated. All the intermediate conditions are illustratively indicated in the table 1.

It is observed that in the present description and attached claims, the elements indicated by the term "module", can be implemented by hardware devices (central units, for example), by software or by a combination of hardware and software.

**Claims**

1. Motorized movement device (1) comprising:

- a frame (101);
- a first (102') and/or second motorized wheels (102") forwardly or rearwardly connected to the frame (101), and a first and/or second motors respectively connected to the first (102') and second wheels (102") and commandable by respective command signals ($I_{left}$, $I_{right}$);
- at least one third wheel (110) rearwardly or forwardly connected to the frame (101) on an opposite side of the device (1) with respect to the first (102') and/or second wheels (102");
- one or more safety sensors comprising:

• one or more sensors (109L, 109R) suitable to sense the presence or absence of a user in proximity of the device (1), and to provide signals indicative of the same;

- a control unit (2) comprising at least one among:

• a module (7) for compensating the slope, configured for determining a compensation force of the slope ($F_{slope}$) of the device;

• a thrust amplifying module (8) configured for determining a force in aid to a thrust ($F_{push}$) manually imparted by the user on the device (1);
• a module (9) for amplifying the yaw torque, configured for determining a force in aid to the turning maneuver performed by the user to the device (1);

wherein said control unit (2) further comprises:

- a torque allocating module (10) configured for determining said command signals ($I_{left}$, $I_{right}$) of the first and/or second motors based on the slope compensation force ($F_{slope}$), and/or on the force in aid to the thrust ($F_{push}$) and/or on the force in aid to the turning ($F_z$);
- a safety module (50) configured for activating or deactivating said modules for compensating the slope (7), and/or for amplifying the thrust (8), and/or for amplifying the yaw torque (9) based on the signals indicative of the presence or absence of the user in proximity of the device,

the motorized movement device (1) further comprising one handle (103) connected to the frame, wherein said one or more sensors for sensing the presence of the user in proximity of the device are associated to said handle (103),
wherein said one or more sensors adapted to sense the presence or absence of a user in proximity of the device (1) comprise a pair of sensors (109L, 109R) respectively suitable to sense the presence or absence of the user, in two opposite lateral positions of the device (1) and to supply signals indicative of the same,
said handle (103) having, at a central portion (115) thereof, a seat (114) internally receiving said pair of sensors (109L, 109R) for sensing the presence of the user, wherein said handle central portion comprises outwardly projecting portions (118L, 118R), each comprising a respective opening (119L, 119R) facing respective lateral portions (116L, 116R) of the handle (103), wherein the sensors (109L, 109R) for sensing the presence of the user are positioned at said openings (119L), so that said sensors (109L, 109R) are capable of sensing the presence or absence of a hand of the user respectively at the lateral portions (116L, 116R) of the handle (103) through said respective openings (119L, 119R),
wherein said sensors (109L, 109R) for sensing the presence or absence of the user in proximity of the device comprise a photocell or an infrared sensor.

2. Motorized movement device (1) according to claim 1,

wherein said one or more safety sensors further comprise:

• at least one sensor of a pair of sensors (111f, 111r) respectively suitable to sense the presence or absence of load of the device at the front and/or at the rear, and to provide signals indicative of the same;

wherein said safety module (50) is further configured for activating or deactivating said modules for compensating the slope (7), and/or for amplifying the thrust (8), and/or for amplifying the yaw torque (9) based on the signals indicative of the presence or absence of the load of the device at the front and/or at the rear.

3. Motorized movement device (1) according to anyone of the preceding claims, further comprising at least one assistance command (14), commandable by the user and connected to the torque allocation module (10) so that, upon the activation of the assistance command (14) by the user, the torque allocation module (10) generates command signals ($I_{left}$, $I_{right}$) so that the first and/or second motors supply a driving additional torque, wherein said safety module (50) is further configured for activating or deactivating said assistance command (14) based on the signals indicative of the presence or absence of the user in proximity of the device and/or based on the signals indicative of the presence or absence of the load of the device at the front and/or at the rear.

4. Motorized movement device (1) according to claim 2 or 3 when dependent on claim 2 wherein said third wheel is supported by a wheel support (105) pivoted with respect to the frame (101), said sensor for sensing the load at the front or at the rear comprising a torsion spring (106) which twists due to the effect of the relative rotation between the wheel support (105) and frame (101), wherein the torsion condition of the torsion spring (106) corresponds to the condition of presence or absence of the load, wherein the movement device (1) further comprises a sensor for measuring the torsion of the torsion spring (106) or a switch (112) suitable to sense said torsion condition of the torsion spring (106).

5. Motorized movement device (1) according to claim 2 or 3 when depending on claim 2, wherein said third wheel is supported by a wheel support (105) sliding with respect to the frame (101), said sensor for sensing the load at the front or at the rear comprising a pin (108) fixed to the wheel support (105) sliding in a shaped seat formed in the frame (101) between two stop positions, each respectively corresponding to a load absence condition and to a load presence condition, wherein said movement device (1) comprises a switch (113) suitable to sense said stop positions of the pin (108).

6. Motorized movement device (1) according to claim 2 or 3 when dependent on claim 2, further comprising a first (104') and/or second suspensions (104") operatively interposed between the frame (101) and said first (102') and/or second motorized wheels (102"), and sensors for sensing the elongations ($\theta_{left}$, $\theta_{right}$) of said first (104') and/or second suspensions (104"), configured for supplying signals indicative of the same, wherein at least one of said sensors for sensing the elongations ($\theta_{left}$, $\theta_{right}$) of the suspensions implements said load sensor of the device at the front or at the rear.

7. Movement device according to any of the preceding claims when dependent on claim 3, wherein said projecting portions (119L, 119R) comprise second openings (120L, 120R) suitable to receive respective buttons (121L, 121R), wherein the buttons (121L, 121R), when individually or simultaneously pressed, define said assistance command (14).

8. Motorized movement device (1) according to anyone of the preceding claims, selected in the group consisting of: baby buggies, trolleys, carts for transporting goods, shopping trolleys, golf club trolleys, airport trolleys, suitcases, disabled chairs, wheelchairs, stretches, walkers, hospital beds.

**Patentansprüche**

1. Motorisierte Bewegungsvorrichtung (1), umfassend:

   - einen Rahmen (101);
   - ein erstes (102') und/oder ein zweites motorisiertes Rad (102"), das vorne oder hinten mit dem Rahmen (101) verbunden ist, und einen ersten und/oder einen zweiten Motor, der jeweils mit dem ersten (102') und dem zweiten Rad (102") verbunden ist und durch jeweilige Befehlssignale ($I_{links}$, $I_{rechts}$) ansteuerbar ist;
   - mindestens ein drittes Rad (110), das hinten oder vorne mit dem Rahmen (101) auf einer gegenüberliegenden Seite der Vorrichtung (1) in Bezug zu dem ersten (102') und/oder zweiten Rad (102") verbunden ist;
   - einen oder mehrere Sicherheitssensoren, umfassend:

     • einen oder mehrere Sensoren (109L, 109R), die geeignet sind, um die Anwesenheit oder die Abwesenheit eines Benutzers in der Nähe der Vorrichtung (1) zu erfassen und Signale bereitzustellen, die dies angeben;

   - eine Steuereinheit (2), umfassend mindestens eines unter:

     • einem Modul (7) zum Kompensieren der Neigung, das zum Bestimmen einer Kompensationskraft der Neigung ($F_{Neigung}$) der Vorrichtung konfiguriert ist;
     • einem Schubverstärkungsmodul (8), das zum Bestimmen einer Kraft für eine Unterstützung eines Schubs ($F_{drücken}$) konfiguriert ist, um manuell durch den Benutzer auf die Vorrichtung (1) übertragen zu werden;
     • einem Modul (9) zum Verstärken des Gierdrehmoments, das zum Bestimmen einer Kraft für die Unterstützung des Wendemanövers konfiguriert ist, das durch den Benutzer an der Vorrichtung (1) durchgeführt wird;

     wobei die Steuereinheit (2) ferner umfasst:

     - ein Drehmomentzuweisungsmodul (10), das zum Bestimmen der Befehlssignale ($I_{links}$, $I_{rechts}$) des ersten und/oder des zweiten Motors basierend auf der Neigungskompensationskraft ($F_{Neigung}$) und/oder auf der Kraft für die Unterstützung des Schubs ($F_{drücken}$) und/oder auf der Kraft für die Unterstützung bei dem Drehen ($F_z$) konfiguriert ist;
     - ein Sicherheitsmodul (50), das zum Aktivieren oder Deaktivieren der Module zum Kompensieren der Neigung (7) und/oder zum Verstärken des Schubs (8) und/oder zum Verstärken des Gierdrehmoments (9) basierend auf den Signalen konfiguriert ist, die die Anwesenheit oder die Abwesenheit des Benutzers in der Nähe der Vorrichtung angeben,

die motorisierte Bewegungsvorrichtung (1) ferner umfassend einen Griff (103), der mit dem Rahmen verbunden ist, wobei der eine oder die mehreren Sensoren zum Erfassen der Anwesenheit des Benutzers in der Nähe der Vorrichtung dem Griff (103) zugeordnet sind,

wobei der eine oder die mehreren Sensoren, die angepasst sind, um die Anwesenheit oder die Abwesenheit eines Benutzers in der Nähe der Vorrichtung (1) zu erfassen, ein Paar von Sensoren (109L, 109R) umfassen, die jeweils geeignet sind, um die Anwesenheit oder die Abwesenheit des Benutzers an zwei gegenüberliegenden lateralen Positionen der Vorrichtung (1) zu erfassen und Signale abzugeben, die dies angeben,

wobei der Griff (103) an einem Mittelabschnitt (115) davon einen Sitz (114) aufweist, der innen das Paar von Sensoren (109L, 109R) zum Erfassen der Anwesenheit des Benutzers aufnimmt, wobei der Mittelabschnitt des Griffs nach außen vorstehende Abschnitte (118L, 118R) umfasst, jeder umfassend eine jeweilige Öffnung (119L, 119R), die den jeweiligen lateralen Abschnitten (116L, 116R) des Griffs (103) zugewandt sind, wobei die Sensoren (109L, 109R) zum Erfassen der Anwesenheit des Benutzers an den Öffnungen (119L) positioniert sind, sodass die Sensoren (109L, 109R) in der Lage sind, die Anwesenheit oder die Abwesenheit einer Hand des Benutzers jeweils an den lateralen Abschnitten (116L, 116R) des Griffs (103) durch die jeweiligen Öffnungen (119L, 119R) zu erfassen,

wobei die Sensoren (109L, 109R) zum Erfassen der Anwesenheit oder der Abwesenheit des Benutzers in der Nähe der Vorrichtung eine Fotozelle oder einen Infrarotsensor umfassen.

2. Motorisierte Bewegungsvorrichtung (1) nach Anspruch 1, wobei der eine oder die mehreren Sicherheitssensoren ferner umfassen:

• mindestens ein Sensor eines Paars von Sensoren (111f, 111r), jeweils geeignet, um die Anwesenheit oder die Abwesenheit einer Last der Vorrichtung an der Vorder- und/oder an der Rückseite zu erfassen und um Signale bereitzustellen, die dies angeben;

wobei das Sicherheitsmodul (50) ferner zum Aktivieren oder Deaktivieren der Module zum Kompensieren der Neigung (7) und/oder zum Verstärken des Schubs (8) und/oder zum Verstärken des Gierdrehmoments (9) basierend auf den Signalen konfiguriert ist, die die Anwesenheit oder die Abwesenheit der Last der Vorrichtung an der Vorder- und/oder an der Rückseite angeben.

3. Motorisierte Bewegungsvorrichtung (1) nach einem der vorstehenden Ansprüche, ferner umfassend mindestens einen Unterstützungsbefehl (14), der durch den Benutzer ausgegeben werden kann und mit dem Drehmomentzuweisungsmodul (10) verbunden ist, sodass das Drehmomentzuweisungsmodul (10) bei der Aktivierung des Unterstützungsbefehls (14) durch den Benutzer Befehlssignale ($I_{links}$, $I_{rechts}$) erzeugt, sodass der erste und/oder der zweite Motor ein zusätzliches Antriebsdrehmoment abgeben, wobei das Sicherheitsmodul (50) ferner konfiguriert ist, um den Unterstützungsbefehl (14) basierend auf den Signalen, die die Anwesenheit oder die Abwesenheit des Benutzers in der Nähe der Vorrichtung angeben, und/oder basierend auf den Signalen zu aktivieren oder zu deaktivieren, die die Anwesenheit oder die Abwesenheit der Last der Vorrichtung an der Vorderseite und/oder an der Rückseite angeben.

4. Motorisierte Bewegungsvorrichtung (1) nach Anspruch 2 oder 3, wenn abhängig von Anspruch 2, wobei das dritte Rad durch einen Radträger (105) getragen wird, der in Bezug auf den Rahmen (101) schwenkbar ist, der Sensor zum Erfassen der Last an der Vorderseite oder an der Rückseite umfassend eine Torsionsfeder (106), die sich aufgrund der relativen Drehung zwischen dem Radträger (105) und dem Rahmen (101) verdreht, wobei der Torsionszustand der Torsionsfeder (106) dem Zustand der Anwesenheit oder der Abwesenheit der Last entspricht, wobei die Bewegungsvorrichtung (1) ferner einen Sensor zum Messen der Torsion der Torsionsfeder (106) oder einen Schalter (112) umfasst, der zum Erfassen des Torsionszustands der Torsionsfeder (106) geeignet ist.

5. Motorisierte Bewegungsvorrichtung (1) nach Anspruch 2 oder 3, wenn abhängig von Anspruch 2, wobei das dritte Rad durch einen Radträger (105) getragen wird, der in Bezug auf den Rahmen (101) gleitet, der Sensor zum Erfassen der Last an der Vorderseite oder an der Rückseite umfassend einen an dem Radträger (105) befestigten Stift (108), der in einer in dem Rahmen (101) geformten Sitz zwischen zwei Stopppositionen gleitet, die jeweils einem Lastabwesenheitszustand und einem Lastanwesenheitszustand entsprechen, wobei die Bewegungsvorrichtung (1) einen Schalter (113) umfasst, der zum Erfassen der Stopppositionen des Stifts (108) geeignet ist.

6. Motorisierte Bewegungsvorrichtung (1) nach Anspruch 2 oder 3, wenn abhängig von Anspruch 2, ferner umfassend eine erste (104') und/oder eine zweite Aufhängung (104"), die operativ zwischen dem Rahmen (101) und dem ersten (102') und/oder dem zweiten motorisierten Rad (102") angeordnet ist, und Sensoren zum Erfassen der Dehnungen ($\theta_{links}$, $\theta_{rechts}$) der ersten (104') und/oder der zweiten Aufhängung (104"), die konfiguriert sind, um Signale abzugeben, die dies angeben, wobei mindestens einer der Sensoren zum Erfassen der Dehnungen ($\theta_{links}$, $\theta_{rechts}$) der Auf-

hängungen den Lastsensor der Vorrichtung an der Vorderseite oder an der Hinterseite implementiert.

**7.** Bewegungsvorrichtung nach einem der vorstehenden Ansprüche, wenn abhängig von Anspruch 3, wobei die vorstehenden Abschnitte (119L, 119R) zweite Öffnungen (120L, 120R) aufweisen, die zum Aufnehmen entsprechender Tasten (121L, 121R) geeignet sind, wobei die Tasten (121L, 121R), wenn sie einzeln oder gleichzeitig gedrückt werden, den Unterstützungsbefehl (14) definieren.

**8.** Motorisierte Bewegungsvorrichtung (1) nach einem der vorstehenden Ansprüche, ausgewählt aus der Gruppe, bestehend aus: Kinderwagen, Trolleys, Karren zum Transport von Waren, Einkaufswagen, Golfwagen, Flughafentrolleys, Koffern, Stühlen für Menschen mit Behinderung, Rollstühlen, Tragen, Gehhilfen, Krankenhausbetten.

**Revendications**

**1.** Dispositif (1) de déplacement motorisé comprenant :

- un cadre (101) ;
- une première (102') et/ou une deuxième roue (102") motorisées reliées vers l'avant ou vers l'arrière au cadre (101), et un premier et/ou un second moteur respectivement reliés aux première (102') et deuxième roues (102") et pouvant être commandés par des signaux de commande ($I_{left}$, $I_{right}$) respectifs ;
- au moins une troisième roue (110) reliée vers l'avant ou vers l'arrière au cadre (101) vers l'arrière ou vers l'avant sur un côté opposé du dispositif (1) par rapport à la première (102') et/ou la deuxième roue (102") ;
- un ou plusieurs capteurs de sécurité comprenant :

   • un ou plusieurs capteurs (109L, 109R) appropriés pour détecter la présence ou l'absence d'un utilisateur à proximité du dispositif (1), et pour fournir des signaux indiquant la présence ou l'absence ;

- une unité de commande (2) comprenant au moins l'un parmi :

   • un module (7) de compensation de la pente, configuré pour déterminer une force de compensation de la pente ($F_{slope}$) du dispositif ;
   • un module d'amplification de poussée (8) configuré pour déterminer une force au service d'une poussée ($F_{push}$) exercée manuellement par l'utilisateur sur le dispositif (1) ;
   • un module (9) d'amplification du couple de lacet, configuré pour déterminer une force au service de la manœuvre de virage effectuée par l'utilisateur sur le dispositif (1) ;

dans lequel ladite unité de commande (2) comprend en outre :

   - un module d'attribution de couple (10) configuré pour déterminer lesdits signaux de commande ($I_{left}$, $I_{right}$) du premier et/ou du second moteur sur la base de la force de compensation de pente ($F_{slope}$), et/ou de la force au service de la poussée ($F_{push}$) et/ou de la force au service du virage ($F_z$) ;
   - un module de sécurité (50) configuré pour activer ou désactiver lesdits modules de compensation de la pente (7), et/ou d'amplification de la poussée (8), et/ou d'amplification du couple de lacet (9) sur la base des signaux indiquant la présence ou l'absence de l'utilisateur à proximité du dispositif,

le dispositif (1) de déplacement motorisé comprenant en outre une poignée (103) reliée au cadre, dans lequel ledit ou lesdits capteurs destinés à détecter la présence de l'utilisateur à proximité du dispositif sont associés à ladite poignée (103),
dans lequel ledit ou lesdits capteurs adaptés à détecter la présence ou l'absence d'un utilisateur à proximité du dispositif (1) comprennent une paire de capteurs (109L, 109R) respectivement appropriés pour détecter la présence ou l'absence de l'utilisateur, dans deux positions latérales opposées du dispositif (1) et pour fournir des signaux indiquant la présence ou l'absence,
ladite poignée (103) ayant, au niveau d'une partie centrale (115) de celle-ci, un siège (114) recevant intérieurement ladite paire de capteurs (109L, 109R) destinés à détecter la présence de l'utilisateur, dans lequel ladite partie centrale de poignée comprend des parties saillantes (118L, 118R) vers l'extérieur, chacune comprenant une ouverture (119L, 119R) respective faisant face à des parties latérales (116L, 116R) respectives de la poignée (103), dans lequel les capteurs (109L, 109R) destinés à détecter la présence de l'utilisateur sont positionnés au niveau desdites ouvertures (119L), de sorte que lesdits capteurs (109L, 109R) sont capables de détecter la présence ou l'absence d'une main de l'utilisateur respectivement au niveau des parties latérales (116L, 116R) de la poignée (103) à travers lesdites ouvertures (119L, 119R) respectives,
dans lequel lesdits capteurs (109L, 109R) destinés à détecter la présence ou l'absence de l'utilisateur à proximité du dispositif comprennent une photocellule ou un capteur infrarouge.

2. Dispositif (1) de déplacement motorisé selon la revendication 1,

dans lequel ledit ou lesdits capteurs de sécurité comprennent en outre :

• au moins un capteur d'une paire de capteurs (111f, 111r) respectivement appropriés pour détecter la présence ou l'absence d'une charge du dispositif à l'avant et/ou à l'arrière, et pour fournir des signaux indiquant la présence ou l'absence ;

dans lequel ledit module de sécurité (50) est en outre configuré pour activer ou désactiver lesdits modules (7) de compensation de la pente, et/ou d'amplification de la poussée (8), et/ou d'amplification du couple de lacet (9) sur la base des signaux indiquant la présence ou l'absence de la charge du dispositif à l'avant et/ou à l'arrière.

3. Dispositif (1) de déplacement motorisé selon l'une quelconque des revendications précédentes, comprenant en outre au moins une commande d'assistance (14), pouvant être commandée par l'utilisateur et connectée au module d'attribution de couple (10) de sorte que, lors de l'activation de la commande d'assistance (14) par l'utilisateur, le module d'attribution de couple (10) génère des signaux de commande ($I_{left}$, $I_{right}$) de sorte que le premier et/ou le second moteur fournissent un couple supplémentaire d'entraînement, dans lequel ledit module de sécurité (50) est en outre configuré pour activer ou désactiver ladite commande d'assistance (14) sur la base des signaux indiquant la présence ou l'absence de l'utilisateur à proximité du dispositif et/ou sur la base des signaux indiquant la présence ou l'absence de la charge du dispositif à l'avant et/ou à l'arrière.

4. Dispositif (1) de déplacement motorisé selon la revendication 2 ou 3 lorsqu'elle dépend de la revendication 2, dans lequel ladite troisième roue est soutenue par un support de roue (105) pivoté par rapport au cadre (101), ledit capteur destiné à détecter la charge à l'avant ou à l'arrière comprenant un ressort de torsion (106) qui se tord sous l'effet de la rotation relative entre le support de roue (105) et le cadre (101), dans lequel l'état de torsion du ressort de torsion (106) correspond à l'état de présence ou d'absence de la charge, dans lequel le dispositif (1) de déplacement comprend en outre un capteur destiné à mesurer la torsion du ressort de torsion (106) ou un commutateur (112) approprié pour détecter ledit état de torsion du ressort de torsion (106).

5. Dispositif (1) de déplacement motorisé selon la revendication 2 ou 3 lorsqu'elle dépend de la revendication 2, dans lequel ladite troisième roue est soutenue par un support de roue (105) coulissant par rapport au cadre (101), ledit capteur destiné à détecter la charge à l'avant ou à l'arrière comprenant une goupille (108) fixée au support de roue (105) qui coulisse dans un siège de forme formé dans le cadre (101) entre deux positions d'arrêt, chacune correspondant respectivement à une état d'absence de charge et à un état de présence de charge, dans lequel ledit dispositif (1) de déplacement comprend un commutateur (113) approprié pour détecter lesdites positions d'arrêt de la goupille (108).

6. Dispositif (1) de déplacement motorisé selon la revendication 2 ou 3 lorsqu'elle dépend de la revendication 2, comprenant en outre une première (104') et/ou une seconde suspension (104") interposées de manière opérationnelle entre le cadre (101) et ladite première (102') et/ou ladite deuxième roue (102") motorisées, et des capteurs destinés à détecter les allongements ($\theta_{left}$, $\theta_{right}$) de ladite première (104') et/ou ladite seconde suspension (104"), configurés pour fournir des signaux indiquant les allongements, dans lequel au moins l'un parmi lesdits capteurs destinés à détecter les allongements ($\theta_{left}$, $\theta_{right}$) des suspensions met en œuvre ledit capteur de charge du dispositif à l'avant ou à l'arrière.

7. Dispositif de déplacement selon l'une quelconque des revendications précédentes lorsqu'elle dépend de la revendication 3,
dans lequel lesdites parties saillantes (119L, 119R) comprennent des secondes ouvertures (120L, 120R) appropriés pour recevoir des boutons (121L, 121R) respectifs, dans lequel les boutons (121L, 121R), lorsqu'ils sont pressés individuellement ou simultanément, définissent ladite commande d'assistance (14).

8. Dispositif (1) de déplacement motorisé selon l'une quelconque des revendications précédentes, choisi dans le groupe constitué de : poussettes, chariots, charrettes pour le transport de marchandises, chariots pour faire les courses, voiturettes de golf, chariots d'aéroport, valises, fauteuils pour handicapés, fauteuils roulants, brancards, déambulateurs, lits d'hôpitaux.

**Fig. 1a**

**Fig. 1b**

**Fig. 1c**

103

109R

102'

110

102''

Fig. 1d

109R

103

109L

1

102''

102'

Fig. 1e

1

109L

103

110

102''

102'

Fig. 1f

103    109L      103    109R

1

110

102'

102''

Fig. 1g

Fig. 2

**Fig. 3a**

**Fig. 3b**

Fig. 4a    Fig. 4b

Fig. 5a    Fig. 5b

Fig. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IT 102017000041556
- EP 2332806 A2
- WO 2013167600 A2

**Non-patent literature cited in the description**

- **MATTEO CORNO** ; **PIERFRANCESCO SPAGNOL** ; **SERGIO M. SAVARESI**. Road slope estimation in bicycles without torque measurements.. *IFAC Proceedings*, 2014, vol. 47 (3), 6295-6300